# EUROPEAN PATENT SPECIFICATION

(11) **EP 1 724 219 B1**
(45) Date of publication and mention of the grant of the patent: **28.07.2010**
(21) Application number: 06075896.8
(22) Date of filing: 18.04.2006
(51) Int. Cl.: B65G 57/06, B65G 57/24

(54) **Apparatus and method for the palletisation of articles**
Vorrichtung und Verfahren zur Palettierung von Artikeln
Dispositif et procédé pour la palettisation d'articles

(30) Priority: 17.05.2005 IT RE20050056
(43) Date of publication of application: 22.11.2006
(73) Proprietor: Zecchetti S.R.L., 42027 Montecchio Emilia (Reggio Emilia) (IT)
(72) Inventor: Giovanelli, Mauro c/o Zecchetti - S.r.l., 42027 Montecchio Emilia (Reggio Emilia) (IT)
(74) Representative: Corradini, Corrado

(56) References cited:
- EP-A- 1 457 442
- EP-A1- 1 180 487
- EP-A2- 0 257 447
- WO-A-2006/126043
- JP-A- 58 162 438
- JP-A- 2003 089 421

## Description

The present finding refers to an apparatus or a method, which permits the palletisation of goods or articles, or rather their arrangement in an organised manner so to make possible their stockpiling and/or expedition.

The palletisation occurs by creating overlapping piles of articles or layers of articles on a base known as pallet. At the top of the piled articles, a frame is usually placed, which is then connected to the base pallet by fastening means, such as straps, so to confer compactness to the set of articles.

Several types of articles, such as bottles, make it necessary to separate the superimposed layers by means of a cardboard sheet known as interlayer.

All of these operations currently require the use of different operating machines, making the palletisation facility costly.

To pile the article layers, it is known to use the palletisation heads, operated by *per se* known robots, which are adapted to draw a layer of articles from a storage surface and transfer them on top of the pallet in an ordered manner.

To load the layer of articles on the palletisation head, it is known to use a pusher which is set to move the layer of articles from the surface to a moveable support surface with which the head is provided. Said support surface is generally composed of a roller shutter which, once the head is positioned over the pallet, retracts so to allow the article or the layer of articles to fall onto the pallet itself.

It has been found that the use of the pusher slows the drawing operations of the articles from the storage surface, slowing the productivity in the creation of the article pallets, and can make the transfer of unstable articles precarious.

EP 1 457 442 discloses a palletizing machine having a work platform where each pallet is formed in succession; a linear conveyor for feeding a succession of loose products up to the work platform; an orienting and compacting unit which receives the loose products from the linear conveyor at the input, and supplies a succession of rows of products at the output; and a layer building unit, which in turn has a layer building platform movable over the work platform and for forming each layer of products and then depositing the layer by gravity onto the top of the pallet being formed on the work platform.

The machine has one push member, external to the building unit, for moving one or more rows of products at a time from the orienting and compacting unit to a transfer platform, movable vertically alongside the building platform to transfer the products to building unit.

The layer building platform is composed of a roller shutter which, once the building unit is positioned over the pallet, retracts so to allow the article or the layer of articles to fall onto the pallet itself.

It is clear that such device does not have optimal productivity due to the external push member that must be operated.

EP 1 180 487 discloses a palletizing apparatus according to the preamble of claim 1 and a method of palletisation according to the preamble of claim 22. The apparatus comprises a carriage for moving a palletizing head between a loading position, in which the palletizing head is positioned between two article conveyors, for receiving a layer of articles, and an unloading position, in which the palletizing head is positioned between two pallet conveyors, for discharging said layer of articles on a pallet.

The palletizing head comprises a frameworks which is provided with a movable surface for supporting the layer of articles, and means for perimetrically gripping said layer of articles, once the latter is loaded on said supporting surface.

In order to receive the layer of articles, the movable surface is provided with a plurality of small conveyors, adapted for running simultaneously with the article conveyor, to thereby transferring the articles from one to the other.

This system implies that the transferring of unstable articles is quite precarious, slowing the loading operations of the palletizing head.

Object of the present invention is to overcome the drawbacks of the prior art in the context of a simple, rational and reliable solution which is capable of limiting the costs of the palletisation facility. The finding attains said object by making available an apparatus for the palletisation of articles in accordance with claim 1, a method of palletisation according to claim 22. The dependent claims delineate preferred and particularly advantageous embodiments of the apparatus according to the invention.

Further characteristics and advantages of the invention will be evident from the reading of the following description, given as exemplifying and not limiting, with the aid of the figures illustrated in the attached tables, wherein:
- Figure 1 illustrates a plan view of the palletisation head of an apparatus according to the invention wherein the transport surface is illustrated in a first operating position;
- Figure 2 illustrates a plan view of the palletisation head of an apparatus according to the invention wherein the transport surface is illustrated in a second operating position;
- Figure 3 illustrates the view from III of figure 1;
- Figure 4 illustrates a section view along the line IV-IV of figure 1;
- Figure 5 illustrates an enlarged view of a detail of the finding;
- Figure 6 illustrates an enlarged partial view from VI of figure 5;
- Figure 7 illustrates an enlarged view of a second detail of the finding.

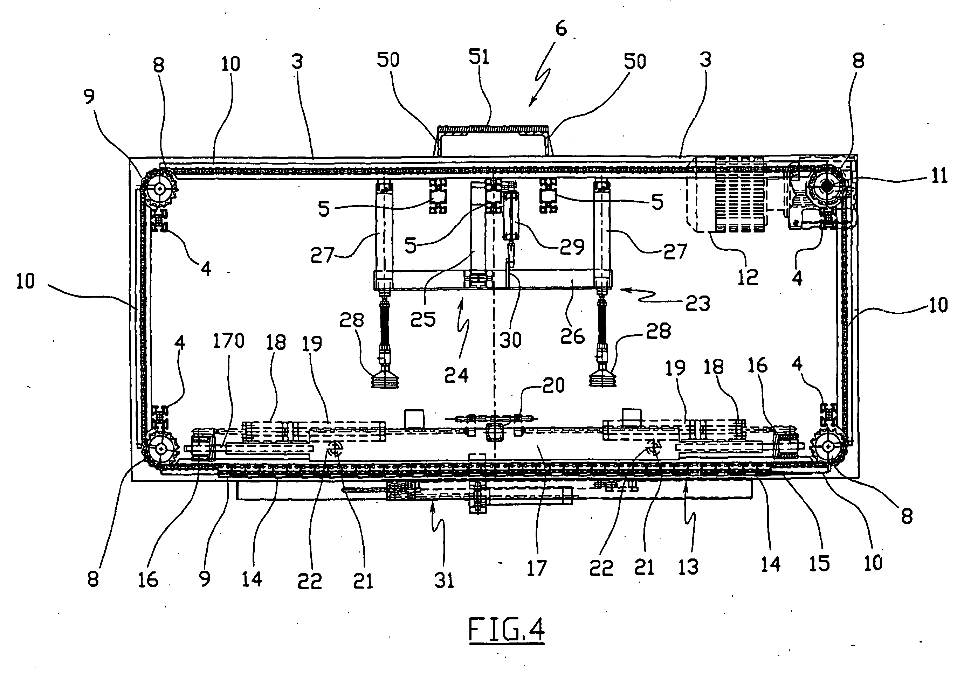

From the mentioned figures, a palletisation head 1 is shown comprising a framework 2 composed of two vertical, rectangular frames 3, parallel to each other, joined together by four horizontal section bars 4 (figure 4) substantially placed at the corners of the frames; the frames are also connected above by three horizontal section bars 5, parallel to each other, placed at the midpoint of the frames.

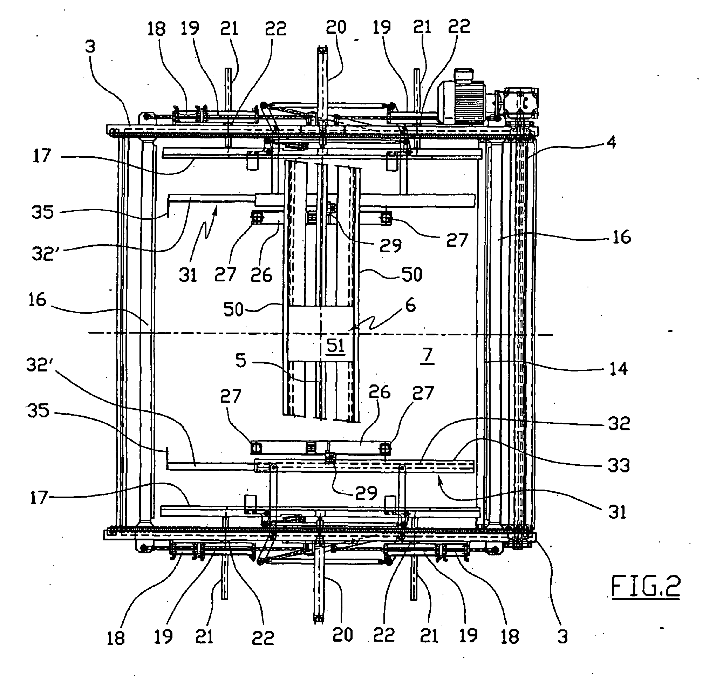

With reference to figures 2 and 4, above the section bars 5, the two frames 3 are also connected by means of two L-shaped bars 50, centrally joined by a plate 51 to make a support 6 which permits the coupling of the head 1 to a normal handling robot, not illustrated since it is *per se* known.

The framework 2 defines a lower opening 7 (indicated in figure 2) through which the drawing and unloading of the articles to be palletised is carried out; the articles are prepared on a storage surface which is not shown.

Said opening 7 is associated with a moveable surface 13, supported by the framework 2, which has the function of supporting the articles once they have been drawn from the storage surface and releasing them when the head is correctly positioned over the pallet to be formed.

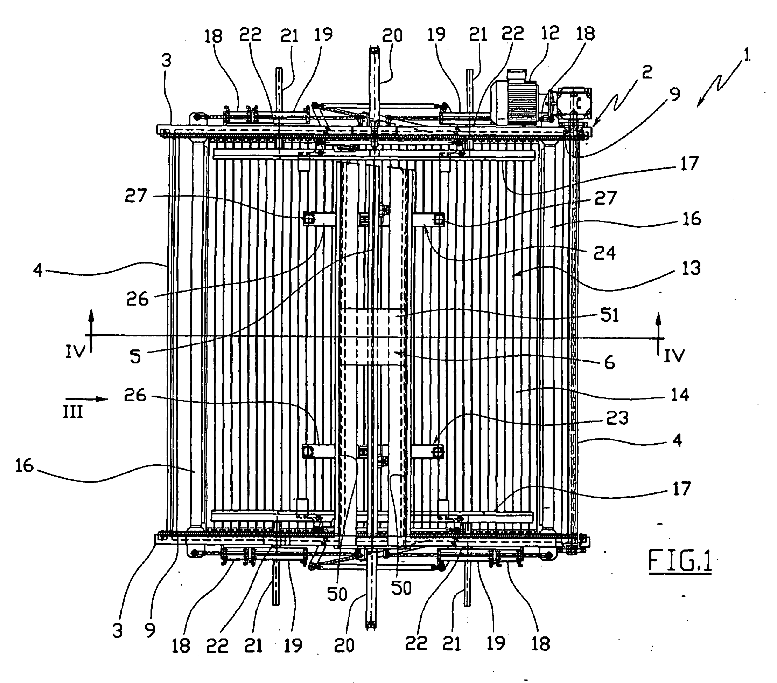

In accordance with the invention, the moveable surface may be positioned between a first operating position wherein the opening 7 is at least partially occluded, illustrated in figure 1, and a second operating position wherein it does not interfere with said opening 7, illustrated in figure 2.

The operation of the moveable surface 13 between the aforesaid positions is assigned to operating means associated with the frames 3.

In particular, each frame 3 (figure 4) bears four gearwheels 8 at the corners, on which a link chain 9 is wound, adapted to slide along the sides of the frame inside the rails 10, indicated with dashed lines in the figures. Two opposing gearwheels 8 are rigidly connected by means of a transmission shaft 11 and are placed in rotation by a gearmotor 12 fixed to one of the frames.

The moveable surface 13 according to a preferred embodiment of the finding comprises a plurality of parallelepiped tubular elements 14 as illustrated in figure 2.

Each of the tubular elements 14 is connected to the ends of the chain 8 links, and are arranged such to form a roller shutter.

The element 14 is slightly rotated around its own axis so that the roller shutter defines a saw tooth support surface.

The tilting of the tubular elements advantageously improves the sliding of the roller shutter with respect to the articles being unloaded. Moreover, one of the tubular elements 14 which defines one of the ends of the moveable surface 13 is associated with a ramp (figure 2) 15 which facilitates the unloading of the articles.

The framework 2 supports, at the opening 7, means adapted to perimetrically grip the articles placed on the storage surface. Said means comprise two pairs of opposing side panels, respectively indicated with the reference numbers 16 and 17. The side panels of each pair can be moved closer and further away from each other, and have as said the function of perimetrically gripping the articles to be palletised, positioning the articles at the same time in the centre of the opening 7 of the framework 2.

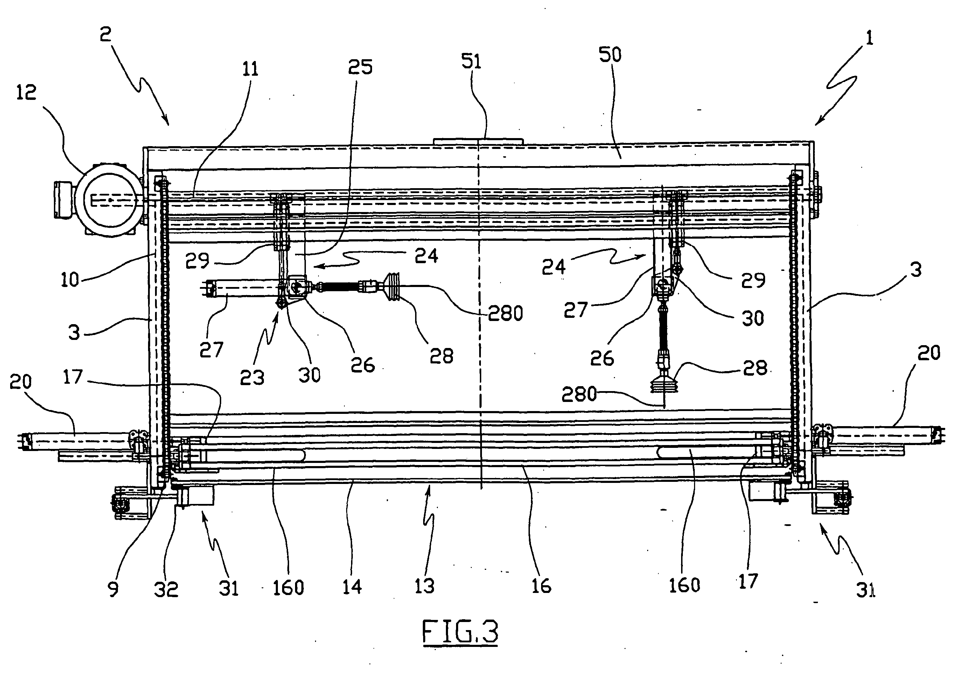

The pair of moveable side panels 16 has fork-shaped ends 160 (figure 3), while the pair of moveable side panels 17 has tapered ends 170 (figure 4), so that the latter are received inside the forks 160 during the mutual approaching of the side panels 16 and 17.

With reference to figures 1 and 2, each of the moveable side panels 17 is operated by two opposing pairs of piston-cylinders groups 18 and 19, supported on the side of the frames 3, and whose rears are connected to each other.

The moveable side panels 16, on the other hand, are operated by a piston-cylinder group 20 supported by the frames 3. The movement of the moveable side panels 17 is guided by two rods 21 fixed to the side panels themselves and adapted to slide inside the respective guide sleeves 22 fixed to the frames 3.

The framework 2 also supports drawing means 23 of the interlayer used as separator element between the superimposed layers of articles. Said drawing means also have the function of moving, or rather drawing and releasing, the frame which must be placed at the top of the pallet.

In accordance with a preferred embodiment the present invention, said drawing means 23 comprise two identical, opposing small frameworks 24 (figure 4) supported by the section bars 5.

Each small framework has a column 25 to which a horizontal bar 26 is centrally hinged, at whose two ends a piston-cylinder group 27 is fixed whose rod bears a suction cup 28. Due to the piston-cylinder 27, each suction cup can be vertically moved between a raised position and a lowered position.

The suction cups 28 are connected to a suction device, not illustrated since it is *per se* known, which at the act of drawing the interlayer creates and maintains a vacuum inside the suction cup 28 so to hold the interlayer.

With reference to figure 3, the two suction cups 28 supported by each small framework 24 may be positioned between a first operating work position, illustrated in the small framework 24 on the right in figure 3 wherein the axis 280 of the suction cups 28 is vertical, and a second non-operating rest position, illustrated in the small framework 24 on the left in figure 3 wherein the axis 280 of the suction cups 28 is horizontal.

The positioning of the suction cups in the two respectively operating and non-operating mentioned positions is assigned to a piston-cylinder group 29, whose rear is fixed to the section bars 5, and whose rod is connected to a plate 30 fixed to the bar 26.

The palletisation head is preferably also equipped with a layer-pressing device which has the function of pressing the interlayer during the release of the article on the pallet.

The layer-pressing device is positioned below the framework 2 and comprises two opposing side panels 31, each of which fixed below the frames 3.

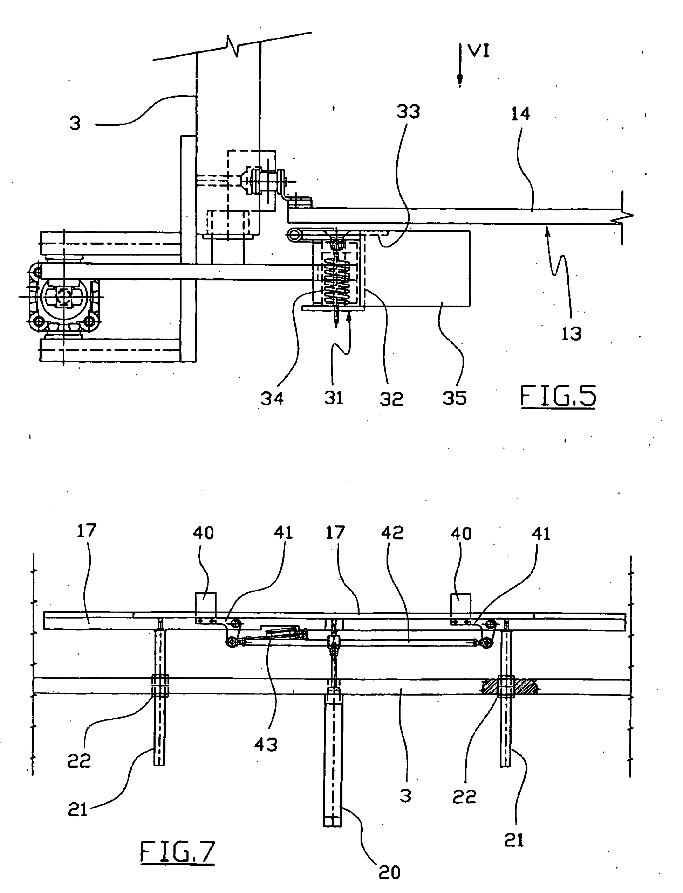

With reference to figures 2 and 5, each of said side panels is composed of two section bars 32 and 32' (figure 2), which are telescopic and C-shaped, to which a horizontal plate 33 is associated which projects cantilevered with respect to the section bars 32 and 32'. Preferably, said plate 33 is hinged to said section bars and can rotate with respect to them against the action of a spring 34. At the ends of the horizontal sides of the device, a second vertical plate 35 is fixed whose function is to block the movements of the interlayer in the movement direction of the moveable surface 13.

Each side panel 31 is connected to a positioning device adapted to move it from a first operating position wherein it is found below the side panels 17, as illustrated in figure 3, and a second operating position, illustrated in figure 2, wherein it is found inside the opening 7.

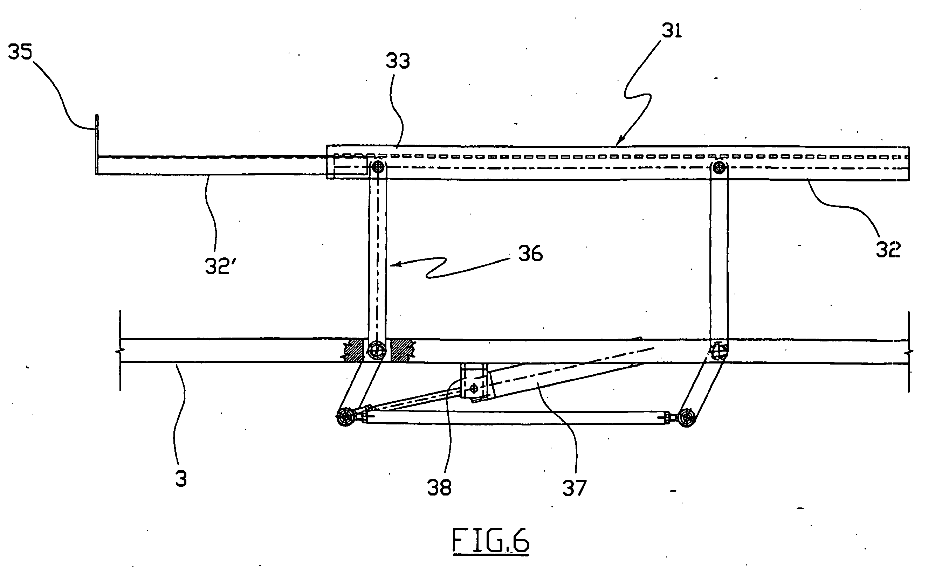

The positioning device, illustrated in figure 6, is an articulated parallelogram wherein one of the sides of the parallelogram is composed by the section bar 32. The operation of the articulated parallelogram is assigned to a pneumatic jack 37, which is hinged and supported by a bracket 38 cantilevered fixed outside the frame 3.

Finally, the two side panels 17 are associated with means which overall permit drawing the pallet from an appropriate store and releasing it in the point wherein it is desired to create a pile of articles. With reference to figure 7, said drawing means of the pallet, associated with each side panel 17, comprises two plates 40 fixed to the ends of the two angular (L-shaped) elements 41 hinged to the side panel 17. The free ends of the two angular elements are connected by means of a bar 42. Furthermore, one of the free ends is associated with the rod of a pneumatic jack 43, whose rear is fixed to a bracket which arises from the side panel 17. Operating the jack, the two plates 40 are therefore rotated between an operating position, illustrated in figure 7, wherein the side panels project cantilevered and a second, non-operating position wherein the side panels do not project.

The formation of a pallet of articles, for example bottles, by using the apparatus in accordance with a preferred embodiment of the present invention, foresees drawing the pallet from a store and positioning it in the point wherein it is desired to create the pallet of articles.

The moveable surface 13 (the roller shutter) is therefore positioned so that it does not occlude the lower opening 7 of the framework, as illustrated in figure 2.

Subsequently, the head from above moves over the layer of bottles to be moved, and lowers itself on the storage surface where the layer lies. At this point, the operation of the means adapted to perimetrically grip the bottle layer placed on the storage surface is controlled, so that the two pairs of side panels 16 and 17 are positioned in contact with the sides of the bottle layer. Then the head is moved so to drag the bottle layer outside the storage surface. As the layer of products exits from the storage surface, the positioning of the moveable surface 13 is controlled so to occlude the opening 7 (figure 1). The operation speed of the roller shutter must be equal to the movement speed of the head, so to transfer the products from the storage surface to the moveable surface composed of the roller shutter. Once the entire layer is supported by the moveable surface 13, the movement of the head over the pallet is controlled, where the layer of bottles is unloaded, once again controlling the movement of the moveable surface 13 in a position wherein the opening 7 is not occluded (figure 2).

At this point, the head is positioned over the store of interlayers, and the interlayer is drawn by means of the suction cups 28 of the drawing means 23, using the side panels 16 and 17 for correctly orienting the store on which the layers are piled, and it is released over the layer of articles. The operations then are repeated until the final layer composing the pallet is deposited.

It should be made clear that in the release on the pallet of bottle layers subsequent to the first one, when the head is lowered to release the layer, the layer-pressing means are supported on the interlayer placed over the last layer, locking it in position.

Finally, the frame is drawn, always by means of the drawing means 23, and it is deposited on the last layer.

## Claims

1. Apparatus for the palletisation of articles prearranged on a storage surface, comprising:
- a handling robot;
- a palletisation head (1), comprising a framework (2) provided with an upper support (6) coupled to said handling robot, said framework (2) being provided with an opening (7) below which a moveable surface (13) is associated for the support of the articles, said moveable surface (13) being operated by operating means (9, 12) which permit its positioning between a support position of the articles, wherein it at least partially occludes said opening, and an unloading position, wherein it does not interfere with said opening so to release the articles through said opening (7), and wherein said framework (2) is provided with gripping means (16, 17) adapted to perimetrically grip said articles;
**characterised in that** the handling robot is programmed to perimetrically grip a layer of articles prearranged on a storage surface with the gripping means (16, 17), to move the palletisation head (1) so to drag said articles on said storage surface so to bring them outside said storage surface, and, during the dragging of said layer of articles outside said storage surface, to position the moveable surface (13) so to occlude at least partially the opening (7) to support said layer of articles with the moveable surface (13).

2. Apparatus according to claim 1, **characterised in that** said means adapted to perimetrically grip said articles comprise two pairs of opposing side panels (16, 17).

3. Apparatus according to claim 2, **characterised in that** each side panel (16, 17) is associated with an operation means (18, 19).

4. Apparatus according to claim 1, **characterised in that** said moveable surface (17) comprises a roller shutter composed of a plurality of parallelepiped tubular elements (14).

5. Apparatus according to claim 4, **characterised in that** said parallelepiped tubular elements (14) are tilted around their own axis so to define a saw tooth support surface.

6. Apparatus according to claim 4, **characterised in that** said roller shutter is supported by two circular chains (9) fixed to said framework (2).

7. Apparatus according to claim 6, **characterised in that** said chains (9) are operated by a gearmotor (12) to move said moveable surface (13).

8. Apparatus according to claim 1, **characterised in that** the palletisation head (1) comprises means (23) adapted to draw the interlayers and/or frames.

9. Apparatus according to claim 8, **characterised in that** said means (23) adapted to draw and release the interlayers and/or frames comprise a plurality of suction cups (28) connected to a suction device.

10. Apparatus according to claim 9, **characterised in that** each suction cup (28) is connected to a piston-cylinder group (27).

11. Apparatus according to claim 10, **characterised in that** said piston-cylinder group (27) is supported at a bar (26) which can rotate so to position said suction cups (28) between a first operating position wherein the axis (280) of said suction cups (28) is vertical and a second non-operating position wherein the axis (280) of said suction cups (28) is horizontal.

12. Apparatus according to claim 1, **characterised in that** the palletisetion head (1) comprises layer-pressing means.

13. Apparatus according to claim 12, wherein said layer-pressing means comprise two opposing side panels (31), each of which is fixed below frames (3) of the framework (2).

14. Apparatus according to claim 13, **characterised in that** each side panel (31) is composed by two section bars (32, 32'), telescopic and C-shaped, to which a horizontal plate (33) is associated which projects cantilevered with respect to the section bars (32, 32').

15. Apparatus according to claim 14, **characterised in that** said plate (33) is hinged to the two section bars (32, 32') and can rotate with respect to the same against the action of a spring (34).

16. Apparatus according to claim 13, **characterised in that** each section bar (32, 32') comprises a second orthogonal plate (35) at least at one end.

17. Apparatus according to claim 13, **characterised in that** each side panel (31) is associated with a positioning device adapted to make it move between a first operating position wherein it is found below the side panels (17) and a second operating position wherein it is found inside the opening (7).

18. Apparatus according to claim 17, **characterised in that** said positioning device comprises an articulated parallelogram (36), operated by a pneumatic jack (37).

19. Apparatus according to claim 1, **characterised in that** the palletisation head (1) comprises means for drawing a pallet from an appropriate store.

20. Apparatus according to claim 19, **characterised in that** said drawing means of the pallet are associated with said means (16, 17) which perimetrically grip the articles.

21. Apparatus according to claim 2 and 20, **characterised in that** said drawing means of the pallet comprise two plates (40) fixed to the ends of two angular (L-shaped) elements (41) hinged to the side panel (17), the free ends of the two angular elements being connected by means of a bar (42), and there being hinged to one of the ends of said angular elements a rod of a pneumatic jack (43), whose rear is fixed to a bracket which is derived from the side panel (17).

22. Method of palletisation comprising the following operating steps:
- prearranging an article on a storage surface,
- drawing said article with a palletisation head,
- releasing said article on a pallet,
**characterised in that** the operation of drawing said article on said storage surface foresees perimetrically gripping said article; dragging said article on said storage surface so to bring it outside said storage surface; inserting below the article, during the dragging of the article outside said storage surface, a moveable surface of support of the article itself.

## Patentansprüche

1. Vorrichtung für die Palettierung von auf einer Lagerfläche ausgerichteten Artikeln, einschließlich:
- eines Handhabungsroboters;
- eines Palettierkopfes (1), einschließlich eines Gestells (2) mit einem oberen Auflager (6), das an den Handhabungsroboter gebunden ist, wobei das Gestell (2) eine Öffnung (7) aufweist, unter der sich eine bewegliche Fläche (13) als Auflager für die Artikel befindet. Die bewegliche Fläche (13) wird von Betätigungsmitteln (9, 12) betrieben, welche eine Anordnung der Fläche in eine Ablageposition für die Artikel ermöglichen, in der sie wenigstens teilweise die Öffnung verdeckt, und eine Ausgabeposition, in der sie die Öffnung nicht überlagert, so dass die Artikel durch die Öffnung (7) gleiten können, und wobei das Gestell (2) mit Greifmitteln (16, 17) ausgestattet ist, welche die Artikel umfassend greifen können;
**dadurch gekennzeichnet, dass** der Handhabungsroboter so programmiert ist, dass er umfassend eine Schicht an auf einer Lagerfläche ausgerichteten Artikeln mit den Greifmitteln (16, 17) greift, um den Palettierkopf (1) so zu bewegen, dass er die Artikel auf der Lagerfläche in einen Bereich außerhalb der Lagerfläche zieht, und um die bewegliche Fläche (13) beim Ziehen der Schicht an Artikeln in einen Bereich außerhalb der Lagerfläche so zu positionieren, dass sie die Öffnung (7) wenigstens teilweise verdeckt, um die Schicht an Artikeln mit der beweglichen Fläche (13) zu halten.

2. Vorrichtung nach Patentanspruch 1, **dadurch gekennzeichnet, dass** die Mittel zum umfassenden Greifen der Artikel zwei Paar gegenüberliegender Seitenplatten (16, 17) beinhalten.

3. Vorrichtung nach Patentanspruch 2, **dadurch gekennzeichnet, dass** jede Seitenplatte (16, 17) mit einem Betätigungsmittel (18, 19) verbunden ist.

4. Vorrichtung nach Patentanspruch 1, **dadurch gekennzeichnet, dass** die bewegliche Fläche (13) eine Rollfläche aus einer Vielzahl an parallelotopen Röhrenelementen (14) beinhaltet.

5. Vorrichtung nach Patentanspruch 4, **dadurch gekennzeichnet, dass** die parallelotopen Röhrenelemente (14) um ihre eigene Achse geneigt sind, so dass eine sägezahnförmige Auflagefläche gebildet wird.

6. Vorrichtung nach Patentanspruch 4, **dadurch gekennzeichnet, dass** die Rollfläche von zwei umlaufenden Ketten (9) gehalten wird, die an dem Gestell (2) befestigt sind.

7. Vorrichtung nach Patentanspruch 6, **dadurch gekennzeichnet, dass** die Ketten (9) von einem Getriebemotor (12) betrieben werden, um die bewegliche Fläche (13) zu bewegen.

8. Vorrichtung nach Patentanspruch 1, **dadurch gekennzeichnet, dass** der Palettierkopf (1) Mittel (23) zum Ziehen der Zwischenschichten und/oder Rahmen beinhaltet.

9. Vorrichtung nach Patentanspruch 8, **dadurch gekennzeichnet, dass** die Mittel (23) zum Ziehen und Loslassen der Zwischenschichten und/oder Rahmen eine Vielzahl an Saugnäpfen (28) beinhalten, die mit einer Saugvorrichtung verbunden sind.

10. Vorrichtung nach Patentanspruch 9, **dadurch gekennzeichnet, dass** jeder Saugnapf (28) mit einer Kolben-Zylinder-Gruppe (27) verbunden ist.

11. Vorrichtung nach Patentanspruch 10, **dadurch gekennzeichnet, dass** die Kolben-Zylinder-Gruppe (27) an einer Stange (26) befestigt ist, die sich so drehen kann, dass sie die Saugnäpfe (28) in eine erste Betriebsposition verbringt, in der die Achse (280) der Saugnäpfe (28) vertikal steht, und in eine zweite Ruheposition, in der die Achse (280) der Saugnäpfe (28) horizontal steht.

12. Vorrichtung nach Patentanspruch 1, **dadurch gekennzeichnet, dass** der Palettierkopf (1) Pressmittel beinhaltet, die auf die Schicht einwirken.

13. Vorrichtung nach Patentanspruch 12, wobei die Pressmittel, die auf die Schicht einwirken, zwei gegenüberliegende Seitenplatten (31) beinhalten, von denen jede unterhalb der Rahmen (3) des Gestells (2) befestigt ist.

14. Vorrichtung nach Patentanspruch 13, **dadurch gekennzeichnet, dass** jede Seitenplatte (31) aus zwei teleskopischen, C-förmigen Profilstangen (32, 32') besteht, denen eine horizontale Platte (33) zugeordnet ist, die freitragend über den Profilstangen (32, 32') steht.

15. Vorrichtung nach Patentanspruch 14, **dadurch gekennzeichnet, dass** die Platte (33) an die zwei Profilstangen (32, 32') angelenkt ist und sich in Bezug auf diese gegen die Kraft einer Feder (34) drehen kann.

16. Vorrichtung nach Patentanspruch 13, **dadurch gekennzeichnet, dass** jede Profilstange (32, 32') eine zweite orthogonale Platte (35) an wenigstens einem Ende aufweist.

17. Vorrichtung nach Patentanspruch 13, **dadurch gekennzeichnet, dass** jede Seitenwand (31) mit einer Stellvorrichtung verbunden ist, die sie in eine erste Betriebsposition bewegt, in der sie sich unterhalb der Seitenwände (17) befindet, und eine zweite Betriebsposition, in der sie sich in der Öffnung (7) befindet.

18. Vorrichtung nach Patentanspruch 17, **dadurch gekennzeichnet, dass** die Stellvorrichtung ein gegliedertes Parallelogramm (36) beinhaltet, das von einem pneumatischen Stellglied (37) betrieben wird.

19. Vorrichtung nach Patentanspruch 1, **dadurch gekennzeichnet, dass** der Palettierkopf (1) Mittel zum Ziehen einer Palette aus einem hierfür geeigneten Lager beinhaltet.

20. Vorrichtung nach Patentanspruch 19, **dadurch gekennzeichnet, dass** die Mittel zum Ziehen der Palette mit den Greifmitteln (16, 17) verbunden sind, welche die Artikel umfassend greifen.

21. Vorrichtung nach den Patentansprüchen 2 und 20, **dadurch gekennzeichnet, dass** die Mittel zum Ziehen der Paletten zwei Platten (40) beinhalten, die an den Enden zweier winkelförmiger (L-förmiger) Elemente (41) befestigt sind, welche wiederum an die Seitenwand (17) angelenkt sind, wobei die freien Enden der zwei winkelförmigen Elemente durch eine Stange (42) miteinander verbunden sind, und an eines der Enden der winkelförmigen Elemente ein Stab eines pneumatischen Stellglieds (43) angelenkt ist, dessen anderes Ende an einer Halterung befestigt ist, die sich von der Seitenwand (17) ableitet.

22. Verfahren zum Palettieren einschließlich folgender Betriebsschritte:
- Ausrichten eines Artikels auf einer Lagerfläche,
- Ziehen des Artikels mit einem Palettierkopf,
- Loslassen des Artikels auf einer Palette,
**dadurch gekennzeichnet, dass** der Vorgang des Ziehens des Artikels auf der Lagerfläche ein umfassendes Greifen des Artikels vorsieht; Ziehen des Artikels auf der Lagerfläche in einen Bereich außerhalb der Lagerfläche; Einfügung einer beweglichen Fläche unter den Artikel als Auflager für den Artikel während des Ziehens des Artikels in einen Bereich außerhalb der Lagerfläche.

## Revendications

1. Appareil pour la palettisation d'articles prédisposés sur une surface de stockage, comprenant :
- un robot de manutention ;
- une tête de palettisation (1), comprenant un châssis (2) doté d'un support supérieur (6) accouplé audit robot de manutention, ledit châssis (2) étant doté d'une ouverture (7) au-dessous de laquelle une surface mobile (13) est associée pour le soutien des articles, ladite surface mobile (13) étant actionnée par des dispositifs d'actionnement (9, 12) qui permettent son positionnement entre une position de soutien des articles, où elle ferme au moins partiellement ladite ouverture, et une position de déchargement, où elle n'interfère pas avec ladite ouverture de manière à libérer les articles à travers ladite ouverture (7), et où ledit châssis (2) est doté de dispositifs de saisie (16, 17) prévus pour saisir lesdits articles par leur périmètre ;
**caractérisé par le fait que** le robot de manutention est programmé pour saisir par le périmètre une couche d'articles prédisposés sur une surface de stockage avec les dispositifs de saisie (16, 17), pour déplacer la tête de palettisation (1) de manière à traîner lesdits articles sur la surface de stockage pour les apporter hors de ladite surface de stockage, et, pendant l'entraînement de ladite couche d'articles hors de ladite surface de stockage, pour positionner la surface mobile (13) de manière à fermer au moins partiellement l'ouverture (7) pour soutenir ladite couche d'articles avec la surface mobile (13).

2. Appareil selon la revendication 1, **caractérisé par le fait que** lesdits dispositifs prévus pour saisir par le périmètre lesdits articles comprennent deux paires de panneaux latéraux opposés (16, 17).

3. Appareil selon la revendication 2, **caractérisé par le fait que** chaque panneau latéral (16, 17) est associé à un dispositif d'actionnement (18, 19).

4. Appareil selon la revendication 1, **caractérisé par le fait que** la surface mobile (13) comprend un volet roulant composé d'une multitude d'éléments tubulaires parallélépipédiques (14).

5. Appareil selon la revendication 4, **caractérisé par le fait que** lesdits éléments tubulaires parallélépipédiques (14) sont inclinés autour de leur propre axe de manière à définir une surface de soutien en dents de scie.

6. Appareil selon la revendication 4, **caractérisé par le fait que** ledit volet roulant est soutenu par deux chaînes circulaires (9) fixées audit châssis (2).

7. Appareil selon la revendication 6, **caractérisé par le fait que** lesdites chaînes (9) sont actionnées par un moteur à engrenages (12) pour déplacer ladite surface mobile (13).

8. Appareil selon la revendication 1, **caractérisé par le fait que** la tête de palettisation (1) comprend un dispositif (23) prévu pour tirer les couches intermédiaires et/ou les cadres.

9. Appareil selon la revendication 8, **caractérisé par le fait que** ledit dispositif (23) prévu pour tirer et relâcher les couches intermédiaires et/ou les cadres comprend une multitude de coupelles d'aspiration (28) connectées à un dispositif d'aspiration.

10. Appareil selon la revendication 9, **caractérisé par le fait que** chaque coupelle d'aspiration (28) est connectée à un groupe piston-cylindre (27).

11. Appareil selon la revendication 10, **caractérisé par le fait que** ledit groupe piston-cylindre (27) est soutenu sur une barre (26) qui peut pivoter de manière à positionner lesdites coupelles d'aspiration (28) entre une première position de travail, où l'axe (280) desdites coupelles d'aspiration (28) est vertical, et une deuxième position de repos, où l'axe (280) desdites coupelles d'aspiration (28) est horizontal.

12. Appareil selon la revendication 1, **caractérisé par le fait que** la tête de palettisation (1) comprend un dispositif de pressage de couche.

13. Appareil selon la revendication 12, où ledit dispositif de pressage de couche comprend deux panneaux latéraux opposés (31), étant chacun fixé au-dessous des cadres (3) du châssis (2).

14. Appareil selon la revendication 13, **caractérisé par le fait que** chaque panneau latéral (31) est composé de deux barres de section (32, 32'), télescopiques et profilées en C, auxquelles est associée une plaque horizontale (33) qui se projette en console par rapport aux barres de section (32, 32').

15. Appareil selon la revendication 14, **caractérisé par le fait que** ladite plaque (33) est fixée par charnière aux deux barres de section (32, 32') et peut pivoter par rapport à ces dernières contre l'action d'un ressort (34).

16. Appareil selon la revendication 13, **caractérisé par le fait que** chaque barre de section (32, 32') comprend une deuxième plaque orthogonale (35) au moins à une extrémité.

17. Appareil selon la revendication 13, **caractérisé par le fait que** chaque panneau latéral (31) est associé à un dispositif de positionnement prévu pour le faire déplacer entre une première position de travail, où il se trouve au-dessous des panneaux latéraux (17), et une deuxième position de travail, où il se trouve à l'intérieur de l'ouverture (7).

18. Appareil selon la revendication 17, **caractérisé par le fait que** ledit dispositif de positionnement comprend un parallélogramme articulé (36), actionné par un vérin pneumatique (37).

19. Appareil selon la revendication 1, **caractérisé par le fait que** la tête de palettisation (1) comprend un dispositif pour tirer une palette depuis un magasin approprié.

20. Appareil selon la revendication 19, **caractérisé par le fait que** ledit dispositif de traction de la palette est associé audit dispositif (16, 17) qui saisit les articles par leur périmètre.

21. Appareil selon les revendications 2 et 20, **caractérisé par le fait que** ledit dispositif de traction de la palette comprend deux plaques (40) fixées aux extrémités de deux éléments angulaires (en L) (41) fixés par charnière au panneau latéral (17), les extrémités libres des deux éléments angulaires étant reliées à l'aide d'une barre (42) et une tige d'un vérin pneumatique (43) étant reliée par charnière à l'une des extrémités desdits éléments angulaires, l'arrière dudit vérin étant fixé à un bras obtenu à partir du panneau latéral (17).

22. Méthode de palettisation comprenant les étapes de fonctionnement suivantes :
- prédisposition d'un article sur une surface de stockage ;
- traction dudit article avec une tête de palettisation ;
- libération dudit article sur une palette ;
**Caractérisée par le fait que** l'opération de traction dudit article sur ladite surface de stockage prévoit la saisie dudit article par son périmètre ; la traction dudit article sur ladite surface de stockage de manière à le porter hors de ladite surface de stockage ; l'insertion d'une surface mobile au-dessous de l'article pour soutenir l'article même, pendant la traction de l'article hors de la surface de stockage.
